# EUROPÄISCHE PATENTSCHRIFT

(11) **EP 3 694 796 B1**
(45) Veröffentlichungstag und Bekanntmachung des Hinweises auf die Patenterteilung: **17.09.2025**
(21) Anmeldenummer: 18783421.3
(22) Anmeldetag: 02.10.2018
(51) Int. Cl.: B65G 47/08, B65G 47/244

(54) **VORRICHTUNG UND VERFAHREN ZUM UMGANG MIT IN MINDESTENS DREI REIHEN BEWEGTEN STÜCKGÜTERN**
APPARATUS AND METHOD FOR HANDLING ARTICLES MOVED IN AT LEAST THREE ROWS
ARRANGEMENT ET PROCÉDÉ DE MANUTENTION DE MARCHANDISES À LA PIÈCE DÉPLACÉES DANS AU MOINS TROIS RANGÉES

(30) Priorität: 10.10.2017 DE 102017123567
(43) Veröffentlichungstag der Anmeldung: 19.08.2020
(73) Patentinhaber: KRONES Aktiengesellschaft, 93073 Neutraubling (DE)
(72) Erfinder: BEER, Erhard, 93073 Neutraubling (DE); SCHWALB, Felix, 93073 Neutraubling (DE); MEHDI, Arsalan, 93073 Neutraubling (DE); WESTERMEIER, Christian, 93073 Neutraubling (DE); KIRZINGER, Johannes, 93073 Neutraubling (DE); KOLLMUSS, Manuel, 93073 Neutraubling (DE); EHBERGER, Marco, 93073 Neutraubling (DE); ASTNER, Michael, 93073 Neutraubling (DE); GRIMM, Sebastian, 93073 Neutraubling (DE)
(74) Vertreter: Benninger, Johannes
(86) Internationale Anmeldenummer: PCT/EP2018/076878
(87) Internationale Veröffentlichungsnummer: WO 2019/072660

(56) Entgegenhaltungen:
- EP-A1- 1 223 121
- EP-A1- 1 223 121
- EP-A1- 3 694 795
- EP-A2- 2 246 277
- EP-A2- 2 246 277
- DE-A1- 102013 202 872
- DE-A1- 102013 202 872
- KRONES: "Robobox T Tripod solution for the palletising technology", 30 July 2017 (2017-07-30), XP055538238, Retrieved from the Internet <URL:https://www.google.com/url?sa=t&rct=j&q=&esrc=s&source=web&cd=12&cad=rja&uact=8&ved=2ahUKEwj2rtCbsdTfAhVP-qQKHXrDDjYQFjALegQIABAC&url=https%3A%2F%2F5.imimg.com%2Fdata5%2FEN%2FFE%2FMY-4754822%2Fkrones-robobox-t-gs-grouping-system.pdf&usg=AOvVaw334_Wx4Wp941sCIZ_I_oZA> [retrieved on 20190104]
- KRONES: "Robobox T Tripod solution for the palletising technology", 30 July 2017 (2017-07-30), XP055538238, Retrieved from the Internet <URL:https://www.google.com/url?sa=t&rct=j&q=&esrc=s&source=web&cd=12&cad=rja&uact=8&ved=2ahUKEwj2rtCbsdTfAhVP-qQKHXrDDjYQFjALegQIABAC&url=https%3A%2F%2F5.imimg.com%2Fdata5%2FEN%2FFE%2FMY-4754822%2Fkrones-robobox-t-gs-grouping-system.pdf&usg=AOvVaw334_Wx4Wp941sCIZ_I_oZA> [retrieved on 20190104]

## Beschreibung

Die vorliegende Erfindung betrifft eine Vorrichtung zum Umgang mit in mindestens drei parallelen Reihen bewegten Stückgütern mit den Merkmalen des unabhängigen Anspruchs 1. Weiterhin betrifft die Erfindung ein Verfahren zum Umgang mit in mindestens drei parallelen Reihen bewegten Stückgütern mit den Merkmalen des unabhängigen Verfahrensanspruchs 8.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Die Offenlegungsschrift EP 2 246 277 A2 betrifft eine Vorrichtung und ein Verfahren zum definierten Zusammenführen von Gebinden, bei der die Gebinde Stoß an Stoß auf mindestens einem Abförderer der weiteren Verarbeitung bzw. Handhabung zugeführt werden. Insbesondere offenbart EP 2 246 277 A2 eine Vorrichtung zum Umgang mit in mindestens drei parallelen Reihen bewegten Stückgütern, umfassend:
- mindestens zwei unabhängig voneinander ansteuer- und bewegbare Manipulatoren für Stückgüter,
- wenigstens drei parallel zueinander angeordnete Transporteinrichtungen, über welche die bewegten Stückgüter in einer Transportrichtung zu Erfassungsbereichen der mindestens zwei Manipulatoren transportierbar sind,
- wobei den Erfassungsbereichen der mindestens zwei Manipulatoren mindestens eine parallele, sich jeweils an die Transporteinrichtungen fluchtend anschließende Horizontalfördereinrichtung ungeordnet ist, welche die in die Erfassungsbereiche gelangenden und dort mittels der Manipulatoren gedrehten und/oder verschobenen Stückgüter in Transportrichtung transportiert.

Das Dokument DE 10 2013 202 872 A1 beschreibt ein Verfahren und eine Vorrichtung zum Ausrichten und/oder zum Gruppieren einer Anzahl von in wenigstens einer Reihe hintereinander beförderten Stückgütern und/oder Gebinden, die in horizontaler Richtung zu einem Bewegungsraum befördert werden, wo jedes einzelne zu bewegende Stückgut oder Gebinde mittels einer zumindest in horizontaler Richtung beweglichen und/oder rotierbaren Manipulationseinrichtung an wenigstens einer Seitenfläche kontaktiert und verschoben und/oder gedreht wird.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

Angesichts des bekannten Standes der Technik kann es als Ziel der vorliegenden Erfindung angesehen werden, eine exakte und positionsgenaue und insbesondere schnelle Verarbeitung und Handhabung von Stückgütern zu ermöglichen, die in mindestens drei Reihen befördert bzw. transportiert werden. Die Bewegungssteuerung von mindestens zwei parallel angeordneten und im Wesentlichen parallel arbeitenden Manipulatoren zur Erfassung der Stückgüter soll exakt auf die Position der angelieferten Stückgüter abstimmbar sein, ohne dass hierzu ein großer Rechen- und/oder Steuerungsaufwand erforderlich sein soll. Alternativ und/oder zusätzlich soll die Position der angelieferten Stückgüter angepasst werden, um eine exakte und positionsgenaue Verarbeitung und Handhabung von Stückgütern zu gewährleisten

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung der Manipulatoren betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit in mindestens zwei parallelen Reihen bewegten Stückgütern und mit einem Verfahren zum Umgang mit in mindestens zwei parallelen Reihen bewegten Stückgütern erreicht, welche die Merkmale der unabhängigen Patentansprüche 1 und 9 umfassen. Merkmale vorteilhafter Weiterbildungen der Erfindung ergeben sich aus den jeweiligen abhängigen Ansprüchen.

Die Erfindung betrifft eine Vorrichtung gemäß Anspruch 1 und ein Verfahren gemäß Anspruch 8 zum Umgang mit in mindestens drei parallelen Reihen bewegten Stückgütern. Die Stückgüter werden über wenigstens drei parallel zueinander angeordnete Transporteinrichtungen in mindestens drei Reihen in einer Transportrichtung zu mindestens einem Erfassungsbereich von mindestens zwei unabhängig voneinander ansteuer- und bewegbaren Manipulatoren transportiert. Erfindungsgemäß ist jedem der beiden Manipulatoren jeweils ein eigener Erfassungsbereich und/oder Bewegungsraum zugeordnet. Hierbei kann es in einigen Fällen sinnvoll sein, wenn sich die mindestens zwei Erfassungsbereiche der mindestens zwei Manipulatoren zumindest bereichsweise überlappen.

Den Erfassungsbereichen der mindestens zwei Manipulatoren sind mindestens drei parallele Horizontalfördereinrichtungen zugeordnet, welche die in die Erfassungsbereiche gelangenden und dort mittels der Manipulatoren gedrehten und/oder verschobenen Stückgüter in Transportrichtung weiterführen. Insbesondere ist vorgesehen, dass sich jeweils eine Horizontalfördereinrichtung fluchtend an eine Transporteinrichtung anschließt.

Weiterhin ist den wenigstens zwei Erfassungsbereichen und/oder Bewegungsräumen der mindestens zwei Manipulatoren wenigstens eine optische Erfassungseinrichtung zur Gewinnung von Raumkoordinaten und/oder Positions- und/oder Umrissdaten wenigstens eines in Transportrichtung bewegten Stückgutes der wenigstens drei Reihen zugeordnet.

Die wenigstens eine optische Erfassungseinrichtung liefert entsprechende Raumkoordinaten und/oder Positions- und/oder Umrissdaten an eine Steuer- und/oder Auswerteeinheit, aufgrund derer die Manipulatoren und/oder die wenigstens drei parallel zueinander angeordnete Transporteinrichtungen und/oder die mindestens drei parallelen Horizontalfördereinrichtungen und/oder weitere Förderkomponenten der Vorrichtung kalibriert und/oder gesteuert werden können.

Wenn im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens drei Reihen hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens drei Reihen hintereinander bewegten Stückgütern.

Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den bewegten Stückgütern kann es sich gemäß einer bevorzugten Ausführungsform um in mindestens drei Reihen hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in drei parallelen Reihen hintereinander bewegten Stückgüter können dabei je nach Anforderung von nachfolgenden Handhabungsvorrichtungen gleich oder unterschiedlich ausgebildet sein.

Die Stückgüter können innerhalb der mindestens drei Reihen auf unterschiedliche Art- und Weise transportiert werden. Gemäß einer Ausführungsform der Erfindung werden die Stückgüter innerhalb der Reihen jeweils über eine entsprechende Transporteinrichtung und jeweils voneinander beabstandet und durch Lücken voneinander getrennt zu den Erfassungsbereichen der wenigsten zwei Manipulatoren der erfindungsgemäßen Vorrichtung transportiert. Bevorzugt können auch Gruppen von Stückgütern den Erfassungsbereichen der wenigsten zwei Manipulatoren zugeführt werden, wobei diese Gruppen jeweils mehrere, insbesondere mindestens zwei zumindest weitgehen lückenlos aneinandergrenzende Stückgüter innerhalb der mindestens drei Reihen umfassen können. Die Gruppen können auch unterschiedlich groß sein; zudem kann einer Gruppe mit zwei, drei oder vier lückenlos aneinandergrenzenden Stückgütern ein einzelnes Stückgut folgen etc. Eine weitere Ausführungsform sieht vor, dass die Stückgüter innerhalb der mindestens drei Reihen ohne Abstände oder mit minimalen Abständen als ununterbrochene bzw. geschlossene Formation zugeführt werden.

Unter einer geschlossenen Formation versteht man in diesem Zusammenhang insbesondere eine als Endlos-Formation ausgebildete Reihe an hintereinander transportierten Stückgütern, die keine Unterbrechung oder nur minimale Unterbrechungen zwischen den Stückgütern aufweist und eine beliebige Anzahl von Stückgütern umfassen kann. In der geschlossenen Formation können die Stückgüter insbesondere Stoß an Stoß transportiert werden. Dies wird beispielsweise durch einen einmalig aufgebrachten Staudruck von hinten verursacht. Der Staudruck wird dabei vorzugsweise vor oder kurz vor den Erfassungsbereichen der wenigsten zwei Manipulatoren der Handhabungsvorrichtung erzeugt. Alternativ kann vorgesehen sein, dass dauerhaft zumindest ein leichter Staudruck von hinten auf die Stückgüter einwirkt. Die geschlossene Formation ist von einer unterbrochenen Formation zu unterscheiden, bei der jeweils Gruppen mit jeweils einer definierten Anzahl von Stückgütern nacheinander zugeführt werden, wobei die Gruppen jeweils dieselbe Anzahl an Stückgütern oder eine unterschiedliche Anzahl an Stückgütern umfassen und jeweils durch Lücken voneinander getrennt sind.

Die mindestens drei parallel zueinander angeordneten Transporteinrichtungen der Vorrichtung können beispielsweise jeweils durch einen Horizontalförderer, insbesondere ein Horizontalförderband, gebildet werden. Auf jeder der mindestens drei Transporteinrichtungen werden die Stückgüter jeweils als Reihe einem Gruppiermodul zugeführt. Von den drei Transporteinrichtungen gelangen die Stückgüter auf drei parallele, sich jeweils an die Transporteinrichtungen fluchtend anschließende Horizontalfördereinrichtungen. Die mindestens drei Horizontalfördereinrichtungen und die mindestens zwei Manipulatoren mit ihren jeweiligen Erfassungsbereichen bilden insbesondere das Gruppiermodul der Vorrichtung. Die Horizontalfördereinrichtungen können jeweils durch ein Förderband o.ä. gebildet werden. Die mindestens drei Horizontalfördereinrichtungen bilden gemeinsam eine Horizontalförderfläche, auf der die einlaufenden Stückgüter durch die Manipulatoren der Vorrichtung innerhalb eines Erfassungsbereiches erfasst, in eine Zielposition und/oder Zielausrichtung verbracht und insbesondere auch freigegeben werden.

Eine besonders bevorzugte Ausführungsform sieht vor, dass die Stückgüter über vier parallele Transporteinrichtungen in vier parallelen Reihen in das Gruppiermodul und insbesondere zu den Erfassungsbereichen der mindestens zwei Manipulatoren bewegt werden und innerhalb des Gruppiermoduls auf vier parallelen, sich jeweils an die vier parallelen Transporteinrichtungen fluchtend anschließenden Horizontalfördereinrichtungen weitergeführt werden. Innerhalb des Gruppiermoduls werden jeweils einzelne Stückgütern oder Gruppen von Stückgütern von den Reihen durch die mindestens zwei Manipulatoren erfasst und in eine Zielposition und/oder Zielanordnung innerhalb des Gruppiermoduls verbracht.

Es kann vorgesehen sein, dass die mindestens drei Transporteinrichtungen und/oder die mindestens drei Horizontalfördereinrichtungen jeweils einzeln ansteuerbar sind. Insbesondere ist jeder der mindestens drei parallelen Transporteinrichtungen und/oder der mindestens drei parallelen Horizontalfördereinrichtungen jeweils ein separater und/oder separat steuerbarer Antrieb zugeordnet. Bevorzugt ist jedoch vorgesehen, dass sich die Transporteinrichtungen und/oder die jeweils fluchtenden Horizontalfördereinrichtungen synchron bewegen bzw. bewegt werden.

Der Erfassungsbereich im Sinne der vorliegenden Erfindung definiert insbesondere einen jeweiligen Bewegungsraum eines Manipulators der erfindungsgemäßen Vorrichtung. Die mindestens zwei Manipulatoren sind typischerweise und/oder vorzugsweise zum klemmenden und/oder formschlüssigen und/oder kraftschlüssigen Erfassen und/oder Entgegennehmen jeweils mindestens eines Stückgutes aus mindestens einer der mittels der wenigstens drei Transporteinrichtungen in den Erfassungsbereich des Manipulators einlaufenden mindestens drei Reihen von hintereinander transportierten Stückgütern ausgebildet. Weiterhin sind die Manipulatoren zum Abtrennen und selektiven Überführen des jeweils mindestens einen erfassten Stückgutes in eine Zielposition und/oder Zielausrichtung ausgebildet.

Gemäß einer Ausführungsform können den Manipulatoren jeweils wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel der Manipulatoren sind während des Erfassens der Stückgüter vorzugsweise parallel zur Transportrichtung der zulaufenden Stückgüter ausgerichtet.

Aus den bewegten Stückgütern mindestens einer der mindestens drei Reihen, insbesondere aus den vereinzelt, in Gruppen oder als geschlossene Formation zugeführten Stückgütern, wird im Erfassungsbereich wenigstens eines der Manipulatoren wenigstens ein transportiertes Stückgut klemmend und/oder kraftschlüssig und/oder formschlüssig vom jeweiligen Manipulator erfasst, von den nachfolgenden Stückgütern der jeweiligen Reihe räumlich abgetrennt und in eine definierte relative Zielposition und/oder Zielausrichtung gegenüber den nachfolgenden Stückgütern der jeweiligen Reihe gebracht. Zeitgleich oder zeitlich versetzt wird wenigstens ein Stückgut einer anderen der wenigstens drei Reihen durch den mindestens einen anderen Manipulator klemmend und/oder kraftschlüssig und/oder formschlüssig erfasst, von den nachfolgenden Stückgütern der jeweiligen Reihe räumlich abgetrennt und in eine definierte relative Zielposition und/oder Zielausrichtung gegenüber den nachfolgenden Stückgütern der jeweiligen Reihe gebracht. Dies erfolgt insbesondere in einem kontinuierlichen Prozess, bei dem die Zufuhr nachfolgender Stückgüter nicht unterbrochen wird, sondern kontinuierlich fortgeführt wird.

Die Stückgüter werden nach Verbringen in ihre jeweilige definierte Zielposition mittels der mindestens zwei sich gegenüberliegenden Klemm- und/oder Greifmittel des jeweiligen Manipulators freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sind.

Die hierzu notwendige Sensorik wird durch wenigstens eine dem Erfassungsbereich und/oder einem Bewegungsraum der wenigstens zwei Manipulatoren räumlich und/oder funktionell zugeordnete optische Erfassungseinrichtung bereitgestellt. Diese dient der Erfassung der oben genannten Daten, d.h. insbesondere der zumindest Raumkoordinaten und/oder Positions- und/oder Umrissdaten eines bewegten Stückguts bzw. auch nur dessen aktuelle Vorderkantenposition bzw. Umrissposition einer zugeordneten der mindestens drei Reihen. Erfindungsgemäß ist die mindestens eine optische Erfassungseinrichtung zumindest temporär parallel beweglich zu den wenigstens drei dem Erfassungsbereich zugeordneten Horizontalfördereinrichtungen ausgebildet.

Zumindest einer der Manipulatoren und/oder die Transporteinrichtungen und/oder die Horizontalfördereinrichtungen und/oder weitere Förderkomponenten der Vorrichtung, werden auf Grundlage der ermittelten Raumkoordinaten und/oder Positions- und/oder Umrissdaten durch eine Steuer- und/oder Auswerteeinheit kalibriert und/oder angesteuert. Weiterhin können die ermittelten Daten auch in Rückkoppelung der Position der beweglichen optischen Erfassungseinrichtung verwendet werden. Beispielsweise kann das Erfassen einer Raumkoordinate oder von entsprechenden Positions- und/oder Umrissdaten eine Aktivierung oder Inaktivierung der optischen Erfassungseinrichtung auslösen, ein Mitführen der optischen Erfassungseinrichtung mit einer der mindestens drei Transporteinrichtungen und/oder einer der mindestens drei Horizontalfördereinrichtungen auslösen o.ä. Sobald sich Abweichungen bei den Gebindemaßen u/o der Fördergeschwindigkeit o.ä. ergeben, kann anhand der Daten für alle nachfolgenden Zyklen bzw. Manipulationsschritte beispielsweise der Bewegungsablauf eines der Manipulatoren nachkorrigiert werden.

Beispielsweise kann je Transporteinrichtung eine optische Erfassungseinrichtung vorgesehen sein, d.h. die Vorrichtung umfasst mindestens drei optische Erfassungseinrichtungen. Vorzugsweise sind diese an den äußeren Längsseiten der durch die mindestens drei Horizontalfördereinrichtungen gebildeten Horizontalförderfläche parallel zur Transportrichtung in oder entgegen der Transportrichtung beweglich angeordnet. Insbesondere sind mindestens zwei der mindesten drei optischen Erfassungseinrichtungen im Bereich einer Längsseite der Horizontalförderfläche angeordnet. Die mindestens eine dritte Erfassungseinrichtung kann dagegen im Bereich der gegenüberliegenden Längsseite der Horizontalförderfläche angeordnet sein.

Die zwei in einem Bereich einer Längsseite der Horizontalförderfläche angeordneten Erfassungseinrichtungen können jeweils über einen eigenen Antrieb unabhängig voneinander bewegt werden. Alternativ kann vorgesehen sein, dass die beiden Erfassungseinrichtungen an einen gemeinsamen Linearantrieb gekoppelt sind und insbesondere nur gemeinsam bewegt werden können. Sind mindestens zwei optische Erfassungseinrichtungen bewegungstechnisch gekoppelt, kann es vorteilhaft sein, diese abwechselnd aktiv zu schalten, um eine saubere Signaltrennung und korrekte Positionsdaten für die jeweils zuvordersten Stückgüter der mindestens zwei den optischen Erfassungseinrichtungen zugeordneten Reihen zu erhalten.

Insbesondere ist somit vorgesehen, dass die optischen Erfassungseinrichtungen jeweils am Rand der Horizontalförderfläche beweglich angeordnet sind. Die einer äußeren Horizontalfördereinrichtung zugeordnete optische Erfassungseinrichtung befindet sich demnach unmittelbar benachbart zu der zugeordneten äußeren Horizontalfördereinrichtung, während sich die einer inneren Horizontalfördereinrichtung zugeordnete optische Erfassungseinrichtung in einem deutlichen Abstand zu der zugeordneten inneren Horizontalfördereinrichtung befindet. Insbesondere ist mindestens eine äußere Horizontalfördereinrichtung zwischen der inneren Horizontalfördereinrichtung und der zugeordneten optischen Erfassungseinrichtung angeordnet.

Jede der optischen Erfassungseinrichtungen deckt einen unterschiedlichen Erkennungsbereich auf der Horizontalförderfläche ab, insbesondere ist der jeweilige Erkennungsbereich genau einer der mindestens drei Horizontalfördereinrichtungen zugeordnet.

Die Erfassung von Stückgütern durch die Manipulatoren und das Erfassen von Daten durch die beweglichen optischen Erfassungseinrichtungen wird in den Anmeldungen mit den Aktenzeichen DE 10 2016 213 400.0, DE 10 2016 124 250.0, DE 10 2017 123 558.2 und DE 10 2017 123 563.9 beschrieben, deren Offenbarung mit in die Beschreibung aufgenommen wird und als Bestandteil dieser Anmeldung anzusehen ist.

Die Vorrichtung und das Verfahren werden insbesondere verwendet, um Stückgüter - beispielsweise Sechser- Gebinde und Vierer- Gebinde - gemäß einem vorgegebenen Lagenschema anzuordnen und somit für eine nachfolgende Palettierung vorzubereiten oder um die Stückgüter auf eine andere Anzahl von weiterführenden Transportspuren zu verteilen und dabei gegebenenfalls um 90 Grad zu drehen. In diesem Fall übernimmt das Gruppiermodul die Funktion eines sogenannten Dreh- und Verteilsystems.

Mindestens eine der optischen Erfassungseinrichtungen wird beispielsweise durch mindestens einen Kantenscanner, insbesondere einen Laserkantenscanner, gebildet, welcher einer Steuer- und/oder Auswerteeinheit der Vorrichtung Raumkoordinaten und/oder Positions- und/oder Umrissdaten für ein bewegtes Stückgut liefert. Mit einem Kantenscanner sind detaillierte Positionsdaten erfassbar, so beispielsweise eine Schrägstellung und/oder andere Fehlpositionierung eines der Stückgüter, was ggf. bei der Erfassung durch den jeweiligen Manipulator korrigiert werden kann. Beispielsweise wird ein solcher Kantenscanner verwendet, um Raumkoordinaten und/oder Positions- und/oder Umrissdaten für das jeweils zuvorderst befindliche Stückgut und/oder einer in Transportrichtung nach vorne oder nach hinten weisender Umrisskante einer entsprechend der optischen Erfassungseinrichtung zugeordneten Reihe zu gewinnen.

Gemäß einer weiteren Ausführungsform ist mindestens eine optische Erfassungseinrichtung eine Kamera mit nachgeschalteter Bildauswertung, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/oder Positions- und/oder Umrisswerte für das jeweils zuvorderst befindliche Stückgut und/oder dessen nach vorne oder nach hinten weisender Umrisskante einer entsprechend der optischen Erfassungseinrichtung zugeordneten Reihe.

Die genannten optischen Erfassungseinrichtungen bzw. Sensoreinrichtungen sind beispielhaft zu verstehen. Grundsätzlich können jedoch auch andere Sensorvarianten zum Einsatz kommen, so bspw. Ultraschallsensoren o. dgl. Weitere geeignete Sensoren können vom Fachmann ebenfalls vorteilhaft eingesetzt werden.

Die Manipulatoren sind weiterhin an die Steuer- und/oder Auswerteeinheit gekoppelt. Die Steuer- und/oder Auswerteeinheit der Vorrichtung steuert beispielsweise allgemein die Bewegung der Manipulatoren und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Ein wichtiger Aspekt der Erfindung besteht darin, dass bei einer mehrreihigen Stückgüterzuführung, insbesondere bei einer Zuführung in mindestens drei Reihen, die Stückgüter der mindestens einen mittleren Reihe vorzugsweise durch eine parallel zur Transportrichtung oder entgegen der Transportrichtung bewegliche mindestens eine optische Erfassungseinrichtung erfasst werden, die an einer Längsseite der Horizontalförderfläche beweglich angeordnet ist, so dass die optische Erfassungseinrichtung nicht in den Bewegungsablauf der mindestens zwei Manipulatoren eingreift.

Die Erfindung bezieht sich weiterhin auf ein Verfahren zum Umgang mit in mindestens drei parallelen Reihen bewegten Stückgütern, welches im Zusammenhang mit der Vorrichtung zum Umgang mit in mindestens drei parallelen Reihen bewegten Stückgütern bereits ausführlich beschrieben worden ist. Das Verfahren kann alternativ oder zusätzlich zu den beschriebenen Merkmalen ein oder mehrere Merkmale und/oder Eigenschaften der Vorrichtung sowie der oben detailliert beschriebenen unterschiedlichen Vorrichtungsvarianten umfassen. Ebenfalls kann die Vorrichtung alternativ oder zusätzlich einzelne oder mehrere Merkmale und/oder Eigenschaften des beschriebenen Verfahrens aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Ausführungsform einer Vorrichtung zum Umgang mit in mindestens drei Reihen bewegten Stückgütern.
Fig. 2 zeigt eine zweite Ausführungsform einer Vorrichtung zum Umgang mit in mindestens drei Reihen bewegten Stückgütern.

Für gleiche oder gleich wirkende Elemente der Erfindung werden identische Bezugszeichen verwendet. Teilweise werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

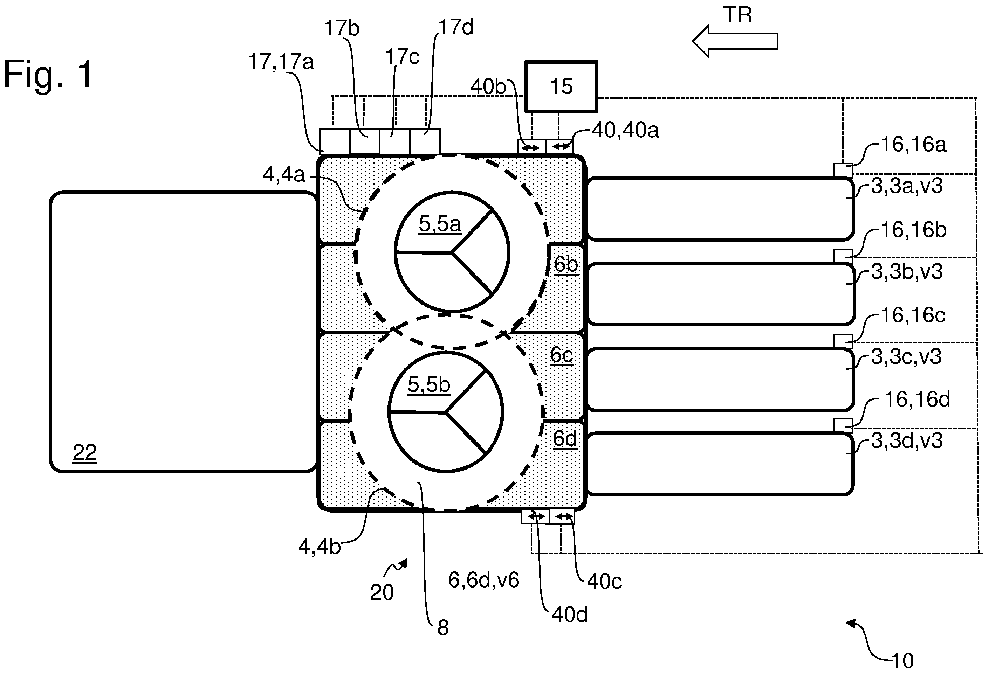

Die schematische Draufsicht der Fig. 1 zeigt eine erste Ausführungsform einer Vorrichtung 10 zum Umgang mit in mindestens drei Reihen bewegten Stückgütern (nicht dargestellt), insbesondere werden hierbei Stückgüter über vier Transporteinrichtungen 3a, 3b, 3c, 3d in vier Reihen dem Gruppiermodul 20 der Vorrichtung 10 zugeführt. Bei den Stückgütern handelt es sich beispielsweise um Gebinde umfassend eine Mehrzahl von Getränkebehältern, die beispielsweise mit einer Schrumpfverpackung zusammengehalten werden.

Die Handhabungsvorrichtung 10 umfasst vier parallel angeordnete erste Transporteinrichtungen 3, 3a, 3b,3c, 3d über welche vorzugsweise unmittelbar aufeinanderfolgende Stückgüter in vier parallelen Reihen in Transportrichtung TR unterbrechungsfrei und/oder mit im Wesentlichen kontinuierlicher Transportgeschwindigkeit v3 in den Erfassungsbereich 4 der zwei beweg-, verschieb- und/oder rotierbaren Manipulatoren 5a, 5b der Handhabungsvorrichtung 10 transportiert werden. Insbesondere ist vorgesehen, dass den zwei parallelen Transporteinrichtungen 3a, 3b ein Erfassungsbereich 4a des Manipulators 5a und den anderen beiden parallelen Transporteinrichtungen 3c, 3d ein Erfassungsbereich 4b des Manipulators 5b zugeordnet ist. Hierbei kann vorgesehen sein, dass sich die Erfassungsbereiche 4a, 4b zumindest bereichsweise überschneiden. Die Transporteinrichtungen 3a, 3b, 3c, 3d werden beispielsweise jeweils durch ein Förderband oder eine andere geeignete Fördereinrichtung gebildet, auf der die Stückgüter vorzugsweise einreihig transportiert werden, wobei zwischen jeweils direkt aufeinander folgenden Stückgütern vorzugsweise keine bzw. nur eine geringfügige, gegebenenfalls prozessbedingte, Lücke besteht. Die Stückgüter laufen somit in jeder der Reihen jeweils in einer sogenannten geschlossenen Formation in den Erfassungsbereich 4a, 4b des entsprechenden Manipulators 5a, 5b ein.

Jeder der zuführenden Transporteinrichtungen 3, 3a, 3b, 3c, 3d ist ein eigener Antrieb 16, 16a, 16b, 16c, 16d zugeordnet, so dass die Transporteinrichtungen 3a, 3b, 3c, 3d unabhängig voneinander durch die Steuerungseinrichtung 15 geregelt werden können. In der Regel werden die Transporteinrichtung 3a, 3b, 3c, 3d mit derselben konstanten Geschwindigkeit v3 betrieben, bei einer Unregelmäßigkeit in der lückenlosen Zufuhr der Stückgüter kann dies durch ein kurzzeitiges Anpassen der jeweiligen Bandgeschwindigkeit korrigiert werden.

In dem Gruppiermodul 20 sind vier parallele Horizontalfördereinrichtungen 6, 6a, 6b, 6c, 6d fluchtend zu den vier Transporteinrichtungen 3a, 3b, 3c, 3d angeordnet und insbesondere den Erfassungsbereichen 4a, 4b der Manipulatoren 5a, 5b zugeordnet. Die vier Horizontalfördereinrichtungen, 6a, 6b, 6c, 6d bilden gemeinsam eine Horizontalförderfläche 8 für die Stückgüter. Besonders bevorzugt ist der Erfassungsbereich 4a hauptsächlich den Horizontalfördereinrichtungen 6a und 6b zugeordnet und der Erfassungsbereich 4b ist hauptsächlich den Horizontalfördereinrichtungen 6c und 6d zugeordnet. Die auf der ersten Transporteinrichtung 3a herangeführten Stückgüter werden auf die erste Horizontalfördereinrichtung 6a überführt und weiter transportiert, die auf der zweiten Transporteinrichtung 3b herangeführten Stückgüter werden auf die zweite Horizontalfördereinrichtung 6b überführt und weiter transportiert usw. Jedem der Horizontalfördereinrichtungen 6a, 6b, 6c, 6d ist ein eigener Antrieb 17, 17a, 17b, 17c, 17d zugeordnet, so dass die Horizontalfördereinrichtungen 6a, 6b, 6c, 6d unabhängig voneinander und/oder unabhängig von den jeweils zuführenden Transporteinrichtungen 3a, 3b, 3c, 3d durch die Steuerungseinrichtung 15 geregelt werden können. In der Regel werden die Horizontalfördereinrichtungen 6a, 6b, 6c, 6d mit derselben konstanten Geschwindigkeit v6 betrieben, bei einer Unregelmäßigkeit in der lückenlosen Zufuhr der Stückgüter 2 kann dies durch ein kurzzeitiges Anpassen der jeweiligen Bandgeschwindigkeit bspw. korrigiert werden. In der Regel werden die Transporteinrichtungen 3a, 3b, 3c und/oder 3d jeweils synchron mit der in einer Flucht angeordneten Horizontalfördereinrichtung 6a, 6b, 6c, 6d angesteuert und reguliert.

Die Manipulatoren 5a, 5b sind zum klemmenden und/oder kraft- und/oder formschlüssigen Entgegennehmen von Stückgütern innerhalb des Gruppiermoduls 20 ausgebildet. Insbesondere werden durch die mindestens zwei Manipulatoren 5a, 5b die in mindestens vier Reihen in geschlossener Formation einlaufenden Stückgüter gemäß einem vorgegebenen Lagenschema auf der Horizontalfördereinrichtung 6 angeordnet, wobei die Stückgüter entsprechend ihrer Anordnung innerhalb des zu erstellenden Lagenschemas gegebenenfalls gedreht werden. Hierbei kann vorgesehen sein, dass jeweils eine vorbereitete Stückgutlage (nicht dargestellt) durch einen Manipulator 5a, 5b erzeugt wird. Es kann aber auch vorgesehen sein, dass die beiden Manipulatoren 5a, 5b beim Erstellen der Stückgutlage zusammenarbeiten, so dass die vorbereitete Stückgutlage Stückgüter mehrerer, insbesondere aller, zuführenden Reihen umfasst.

Die im Gruppiermodul 20 vorbereitete Stückgutlage wird in einem den Horizontalfördereinrichtungen 6a, 6b, 6c, 6d nachfolgend nageordneten Vorgruppierungsmodul 22 zu einer kompakten Lage zusammengeschoben, die nachfolgend palettiert werden kann. Insbesondere ist dem Vorgruppierungsmodul 22 in Transportrichtung TR ein Palettierer (nicht dargestellt) nachgeordnet. Zum Manipulieren der Stückgüter umfassen die Manipulatoren 5a, 5b beispielsweise jeweils einen Klemmgreifer mit zwei gegeneinander zustellbaren Klemmbacken, die ein schnelles Erfassen, Verschieben, Positionieren, Anheben und Freigeben der Stückgüter in der gewünschten Geschwindigkeit mit der gewünschten Stellpräzision erlauben. Bspw. können der Manipulatoren 5a, 5b als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sein, wie es beispielsweise in der Anmeldung mit dem Aktenzeichen DE 10 2016 206 639.0 beschrieben worden ist, deren Inhalt hiermit in diese Anmeldung aufgenommen wird und deren Inhalt dem Leser der vorliegenden Anmeldung als bekannt gelten soll.

Im Gruppiermodul 20 wird jeweils mindestens ein Stückgut oder eine Gruppe bzw. ein sogenannter Takt umfassend mindestens zwei Stückgüter einer der vier Reihen durch einen der Manipulatoren 5a oder 5b gegriffen und verschoben, angehoben und/oder gedreht o.ä., um eine palettierfähige Lage oder eine Vorgruppierung für eine palettierfähige Lage zu bilden. Alternativ können die Manipulatoren 5a, 5b auch als Dreh- und Verteilsystem dienen, um die in vier Reihen einlaufenden Stückgüter für die nachfolgende Bearbeitung auf mehr oder weniger Transportspuren zu verteilen und dabei gegebenenfalls um beispielsweise 90° zu verdrehen.

Damit der Manipulator 5 a, 5b das jeweilige Stückgut bzw. den jeweiligen Takt korrekt greifen kann, ist es notwendig, die genaue Position des Stückgutes innerhalb des Gruppiermoduls 20 zu kennen. Die Positionserkennung der Stückgüter jeder Reihe erfolgt mit Hilfe von Sensoren, insbesondere von vorzugsweise beweglichen Sensoren 40. Insbesondere ist vorgesehen, dass jeder Horizontalfördereinrichtung 6a, 6b, 6c, 6d jeweils ein Sensor 40a, 40b, 40c, 40d zugeordnet ist. Insbesondere sind die den Horizontalfördereinrichtungen 6a, 6b zugeordneten Sensoren 40a, 40b an der Längsseite der Horizontalförderfläche 8 parallel zur Transportrichtung TR und unmittelbar benachbart zur äußeren Horizontalfördereinrichtung 6a angeordnet, während die den Horizontalfördereinrichtungen 6c, 6d zugeordneten Sensoren 40c, 40d an der gegenüberliegenden Längsseite der Horizontalförderfläche 8 parallel zur Transportrichtung TR und unmittelbar benachbart zur äußeren Horizontalfördereinrichtung 6d angeordnet sind.

Bei den mindestens Sensoren kann es sich beispielsweise jeweils um beweglich ausgebildete und/oder angeordnete Lichtschranken, beweglich ausgebildete und/oder angeordnete Laserkantenscanner oder andere geeignete beweglich ausgebildete und/oder angeordnete optische Detektionsmittel handeln, die geeignet sind, bestimmte Parameter eines Stückgutes und/oder bestimmte Parameter eines Taktes von Stückgütern auf optischem Wege zu erkennen.

Beispielsweise sind insgesamt vier bewegliche Sensoren 40a, 40b, 40c, 40d vorgesehen, wobei der bewegliche Sensor 40a derart angeordnet, eingestellt und/oder ausgebildet ist, dass dieser jeweils Parameter der über die äußere Transporteinrichtung 3a auf die Horizontalfördereinrichtung 6a einlaufenden Stückgüter erkennt. Der bewegliche Sensor 40b ist derart angeordnet, eingestellt und/oder ausgebildet ist, dass dieser jeweils Parameter der über die innere Transporteinrichtung 3b auf die Horizontalfördereinrichtung 6b einlaufenden Stückgüter erkennt. Der bewegliche Sensor 40c ist derart angeordnet, eingestellt und/oder ausgebildet ist, dass dieser jeweils Parameter der über die innere Transporteinrichtung 3c auf die Horizontalfördereinrichtung 6c einlaufenden Stückgüter erkennt und der bewegliche Sensor 40d ist derart angeordnet, eingestellt und/oder ausgebildet ist, dass dieser jeweils Parameter der über die äußere Transporteinrichtung 3d auf die Horizontalfördereinrichtung 6d einlaufenden Stückgüter erkennt. Insbesondere erkennen die Sensoren 40a, 40b, 40c, 40d jeweils die Vorderkante eines jeweilig in ihren Erkennungsbereich 50a, 50b, 50c, 50d einlaufenden Stückgutes (nicht dargestellt).

Die sensorisch erfassten Daten werden an die Steuerungseinrichtung 15 übermittelt und von dieser verwendet, um beispielsweise bei Abweichung der Ist- Position von einer Soll- Position, eine Korrektur des vorprogrammierten Bewegungsablaufes der Manipulatoren 5a, 5b zu berechnen. Alternativ und/oder zusätzlich können aufgrund der erfassten Daten auch die jeweiligen Transporteinrichtungen 3a, 3b, 3c, 3d und/oder die jeweiligen Horizontalfördereinrichtungen 6a, 6b, 6c, 6d angesteuert und reguliert werden, um gegebenenfalls einen ermittelten Versatz zwischen der Ist- Position eines jeweilig zuvordersten Stückgutes und einer vordefinierten Soll- Position auszugleichen.

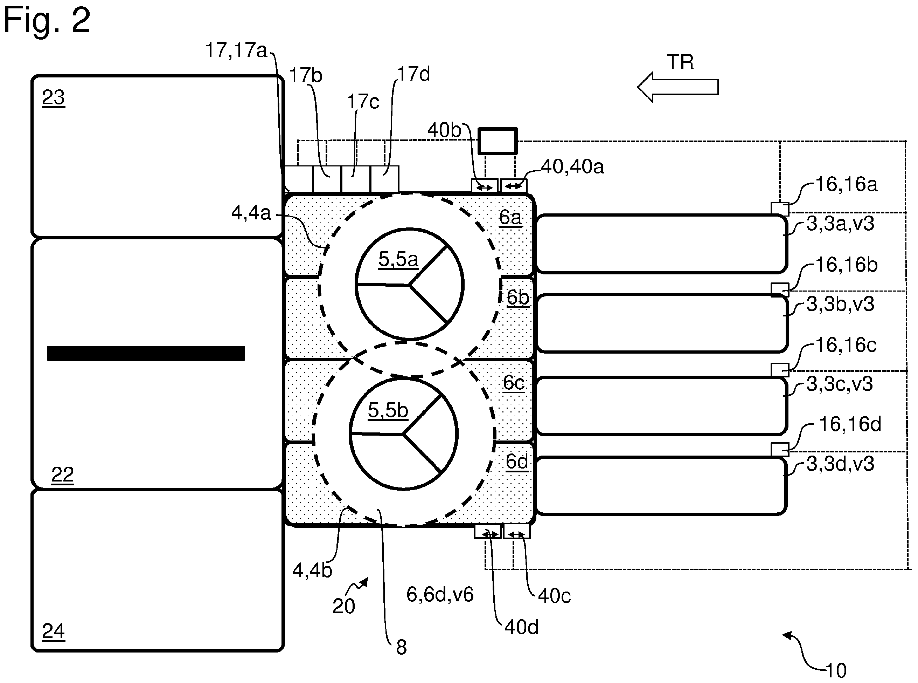

Die schematische Draufsicht der Fig. 2 zeigt eine zweite Ausführungsform einer Vorrichtung 10 zum Umgang mit in vier Reihen bewegten Stückgütern. Es soll nachfolgend nur auf die Unterschiede zur ersten Ausführungsform eingegangen werden, zur Erklärung der weiteren Bezugszeichen wird deshalb auf die Figurenbeschreibung zu Fig. 1 verwiesen. Bei der zweiten Ausführungsform ist vorgesehen, dass die innerhalb der Vorgruppierung 22 fertig gestellte Lage an Stückgütern zur weiteren Bearbeitung nunmehr orthogonal zur Transportrichtung TR entweder nach rechts auf einen ersten Palettierer 23 oder nach links auf einen zweiten Palettierer 24 übergeschoben werden kann. Somit können die innerhalb des Gruppiermoduls 20 zusammengestellten Stückgutlagen schneller abtransportiert werden.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Erläuterung der Figuren 1 und 2 generell von "schematischen" Darstellungen und Ansichten die Rede ist, so ist damit keineswegs gemeint, dass die Figurendarstellungen hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die schematischen Draufsichten der Figuren 1 und 2 ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Es sei an dieser Stelle abschließend nochmals festgehalten, dass die Erfindung grundsätzlich unter Bezugnahme auf eine bevorzugte Ausführungsform bzw. auf mehrere bevorzugte Ausführungsformen beschrieben wurde. Es ist jedoch für einen Fachmann durchaus vorstellbar, dass Abwandlungen oder Änderungen der Erfindung gemacht werden können, ohne dabei den Schutzbereich der nachstehenden Ansprüche zu verlassen.

### Bezugszeichenliste

- 3,3a; 3b, 3c, 3d: Transporteinrichtung
- 4,4a, 4b: Erfassungsbereich
- 5,5a, 5b: Manipulator
- 6,6a, 6b, 6c, 6d: Horizontalfördereinrichtung
- 8: Horizontalförderfläche
- 10: Handhabungsvorrichtung
- 15: Steuerungseinrichtung
- 16, 16a, 16b, 16c, 16d: Antrieb Transporteinrichtung
- 17,17a, 17b, 17c, 17d: Antrieb Horizontalfördereinrichtung
- 20: Gruppiermodul
- 22: Vorgruppierungsmodul
- 23: erster Palettierer
- 24: zweiter Palettierer
- 40; 40a, 40b, 40c, 40d: Sensor

- TR: Transportrichtung
- v3: Transportgeschwindigkeit
- v6: Geschwindigkeit / Fördergeschwindigkeit

## Patentansprüche

1. Vorrichtung (10) zum Umgang mit in mindestens drei parallelen Reihen bewegten Stückgütern, umfassend
- mindestens zwei unabhängig voneinander ansteuer- und bewegbare Manipulatoren (5) für Stückgüter,
- wenigstens drei parallel zueinander angeordnete Transporteinrichtungen (3), über welche die bewegten Stückgüter in einer Transportrichtung (TR) zu Erfassungsbereichen (4) der mindestens zwei Manipulatoren (5) transportierbar sind,
- wobei den Erfassungsbereichen (4) der mindestens zwei Manipulatoren (5) mindestens drei parallele, sich jeweils an die Transporteinrichtungen (3) fluchtend anschließende Horizontalfördereinrichtungen (6) zugeordnet sind, welche die in die Erfassungsbereiche (4) gelangenden und dort mittels der Manipulatoren (5) gedrehten und/oder verschobenen Stückgüter in Transportrichtung (TR) transportieren, sowie
- wenigstens eine den Erfassungsbereichen (4) und/oder Bewegungsräumen der wenigstens zwei Manipulatoren (5) zugeordnete optische Erfassungseinrichtung (40), die zur Gewinnung von Raumkoordinaten und/oder Positions- und/oder Umrissdaten wenigstens eines in Transportrichtung (TR) bewegten Stückgutes der wenigstens drei Transporteinrichtungen (3) vorbereitet und ausgestattet ist,
- wobei zumindest die Manipulatoren (5) und/oder die wenigstens drei parallel zueinander angeordneten Transporteinrichtungen (3) und/oder die mindestens drei parallelen Horizontalfördereinrichtungen (6) und/oder weitere Förderkomponenten der Vorrichtung (10) auf Grundlage der Raumkoordinaten und/oder Positions- und/oder Umrissdaten kalibrierbar und/oder steuerbar sind,
- wobei die mindestens eine optische Erfassungseinrichtung (40) zumindest temporär parallel beweglich zu den wenigstens drei dem Erfassungsbereich (4) zugeordneten Horizontalfördereinrichtungen (6) ausgebildet ist.

2. Vorrichtung (10) nach Anspruch 1, bei der die Stückgüter in vier parallelen Reihen in Transportrichtung (TR) zu den Erfassungsbereichen (4) der mindestens zwei Manipulatoren (5) bewegbar sind, wobei jede dieser Reihen jeweils einer von vier parallelen Transporteinrichtungen (3) zugeordnet und/oder mittels dieser bewegbar ist.

3. Vorrichtung nach Anspruch 2, bei der den Erfassungsbereichen (4) der mindestens zwei Manipulatoren (5) vier parallele, sich jeweils an die vier parallelen Transporteinrichtungen (3) fluchtend anschließende Horizontalfördereinrichtungen (6) zugeordnet sind, welche die in die Erfassungsbereiche (4) gelangenden und dort mittels der Manipulatoren (5) gedrehten und/oder verschobenen Stückgüter in Transportrichtung (TR) transportieren.

4. Vorrichtung nach einem der Ansprüche 1 bis 3, bei der die mindestens drei parallelen Transporteinrichtungen (3) jeweils unabhängig voneinander antreibbar sind, wobei den mindestens drei parallelen Transporteinrichtungen (3) insbesondere jeweils ein separater und/oder separat steuerbarer Antrieb (16) zugeordnet ist.

5. Vorrichtung nach einem der Ansprüche 1 bis 4, bei der die mindestens drei parallelen Horizontalfördereinrichtungen (6) jeweils unabhängig voneinander antreibbar sind, wobei den mindestens drei parallelen Horizontalfördereinrichtungen (6) insbesondere jeweils ein separater und/oder separat steuerbarer Antrieb (17) zugeordnet ist.

6. Vorrichtung nach einem der voranstehenden Ansprüche, bei der eine optische Erfassungseinrichtung (40) je Transporteinrichtung (3) vorgesehen ist, wobei mindestens zwei optische Erfassungseinrichtungen (40) im Bereich einer Längsseite einer durch die mindestens drei Horizontalfördereinrichtungen (6) gebildeten Horizontalförderfläche (8) parallel zur Transportrichtung (TR) in oder entgegen der Transportrichtung (TR) beweglich angeordnet sind.

7. Vorrichtung nach einem der voranstehenden Ansprüche, bei der die optische Erfassungseinrichtung (40) durch mindestens einen Kantenscanner gebildet ist, welcher der Steuer- und/oder Auswerteeinheit (12) Raumkoordinaten und/oder Positions- und/oder Umrissdaten für ein bewegtes Stückgut der jeweilig zugeordneten Reihe liefert, insbesondere Raumkoordinaten und/oder Positions- und/oder Umrissdaten für das jeweils zuvorderst befindliche Stückgut der jeweilig zugeordneten Reihe und/oder einer in Transportrichtung (TR) nach vorne oder nach hinten weisender Umrisskante (30) liefert oder bei der die optische Erfassungseinrichtung (40) durch mindestens eine Kamera mit nachgeschalteter Bildauswertung gebildet ist, aus deren Daten die Steuer- und/oder Auswerteeinheit (12) Raumkoordinaten und/oder Positions- und/oder Umrisswerte für ein bewegtes Stückgut der jeweilig zugeordneten Reihe gewinnt, insbesondere Raumkoordinaten und/oder Positions- und/oder Umrisswerte für das jeweils zuvorderst befindliche Stückgut der jeweilig zugeordneten Reihe und/oder dessen in Transportrichtung (TR) nach vorne oder nach hinten weisender Umrisskante (30) gewinnt.

8. Verfahren zum Umgang mit in mindestens drei parallelen Reihen bewegten Stückgütern, wobei die Stückgüter zu Erfassungsbereichen (4) wenigstens zweier unabhängig voneinander ansteuer- und bewegbarer Manipulatoren (5) transportiert werden,
- wobei den Erfassungsbereichen (4) der mindestens zwei Manipulatoren (5) mindestens drei parallele, sich jeweils an mindestens drei parallele Transporteinrichtungen (3) fluchtend anschließende Horizontalfördereinrichtungen (6) zugeordnet sind, welche die in die Erfassungsbereiche (4) gelangenden und dort mittels der Manipulatoren (5) gedrehten und/oder verschobenen Stückgüter in Transportrichtung (TR) transportieren, und
- wobei in den Erfassungsbereichen (4) jeweils wenigstens ein transportiertes Stückgut der mindestens drei parallelen Reihen durch einen der wenigstens zwei Manipulatoren (5) erfasst, von nachfolgenden Stückgütern der jeweiligen Reihe räumlich abgetrennt und in eine definierte relative Zielposition (P) und/oder Zielausrichtung gegenüber den nachfolgenden Stückgütern der jeweiligen Reihe gebracht wird,
- wobei zumindest Raumkoordinaten und/oder eine Position eines der in Transportrichtung (TR) zu den Erfassungsbereichen (4) bewegten Stückgüter mindestens einer Reihe über wenigstens eine den Erfassungsbereichen (4) räumlich und/oder funktionell zugeordnete optische Erfassungseinrichtung (40) sensorisch erfasst und einer Steuer- und/oder Auswerteeinheit (12) als Positionswert zur Verfügung gestellt wird, und
- wobei zumindest die Manipulatoren (5) und/oder die wenigstens drei parallel zueinander angeordnete Transporteinrichtungen (3) und/oder die mindestens drei parallelen Horizontalfördereinrichtungen (6) und/oder weitere zugeordnete Förderkomponenten auf Grundlage der Raumkoordinaten und/oder Positions- und/oder Umrissdaten kalibriert und/oder gesteuert werden,
- wobei die mindestens eine optische Erfassungseinrichtung (40) zumindest temporär parallel zu den wenigstens drei den Erfassungsbereichen (4) zugeordneten Horizontalfördereinrichtungen (6) bewegt wird.

9. Verfahren nach Anspruch 8, bei dem die Stückgüter in vier parallelen Reihen in Transportrichtung (TR) zu den Erfassungsbereichen (4) der mindestens zwei Manipulatoren (5) bewegt werden, wobei jede dieser Reihen jeweils einer von vier parallelen Transporteinrichtungen (3) zugeordnet ist und/oder mittels dieser bewegt wird und bei dem den Erfassungsbereichen (4) der mindestens zwei Manipulatoren (5) vier parallele, sich jeweils an die vier parallelen Transporteinrichtungen (3) fluchtend anschließende Horizontalfördereinrichtungen (6) zugeordnet sind, welche die in die Erfassungsbereiche (4) gelangenden und dort mittels der Manipulatoren (5) gedrehten und/oder verschobenen Stückgüter in Transportrichtung (TR) transportieren.

10. Verfahren nach einem der Ansprüche 8 oder 9, bei dem die mindestens drei parallelen Transporteinrichtungen (3) jeweils unabhängig voneinander angetrieben werden, wobei den mindestens drei parallelen Transporteinrichtungen (3) insbesondere jeweils ein separater und/oder separat steuerbarer Antrieb (16) zugeordnet ist.

11. Verfahren nach einem der Ansprüche 8 bis 10, bei dem die mindestens drei parallelen Horizontalfördereinrichtungen (6) jeweils unabhängig voneinander angetrieben werden, wobei den mindestens drei parallelen Horizontalfördereinrichtungen (6) insbesondere jeweils ein separater und/oder separat steuerbarer Antrieb (17) zugeordnet ist.

12. Verfahren nach einem der voranstehenden Ansprüche, bei dem jeder Reihe jeweils eine optische Erfassungseinrichtung (40) zugeordnet ist, wobei mindestens zwei optische Erfassungseinrichtungen (40) über einen einzigen Antrieb gemeinsam innerhalb eines Bewegungsbereiches parallel zu einer den Erfassungsbereichen (4) zugeordneten Horizontalfördereinrichtung (6) bewegt werden und/oder wobei jeder Reihe jeweils eine optische Erfassungseinrichtung (40) zugeordnet ist, wobei jede optische Erfassungseinrichtung einen eigenen Antrieb aufweist, wobei mindestens zwei optische Erfassungseinrichtungen (40) unabhängig voneinander im Bereich einer Längsseite der Horizontalfördereinrichtungen (6) parallel zur Transportrichtung (TR) in oder entgegen der Transportrichtung (TR) bewegt werden.

13. Verfahren nach Anspruch 12, bei dem die mindestens drei optischen Erfassungseinrichtungen (40) derart ausgebildet sind, dass eine erste optische Erfassungseinrichtung (40) Stückgüter einer ersten Reihe erfasst, dass eine zweite optische Erfassungseinrichtung (40) Stückgüter einer zweiten Reihe erfasst und dass eine dritte optische Erfassungseinrichtung (40) Stückgüter einer dritten Reihe erfasst.

## Claims

1. An apparatus (10) for handling piece goods being moved in at least three parallel rows, the apparatus (10) comprising
- at least two manipulators (5) for piece goods, which manipulators (5) are controllable and movable independently of each other,
- at least three transport devices (3) arranged parallel to each other, via which the piece goods being moved are transportable in a transport direction (TR) to seizing ranges (4) of the at least two manipulators (5),
- wherein the seizing ranges (4) of the at least two manipulators (5) are assigned at least three parallel horizontal conveyors (6), each of which is aligned with the following transport devices (3), which horizontal conveyors (6) transport the piece goods in transport direction (TR), with the piece goods coming into the seizing ranges (4) and being rotated and/or shifted there by means of the manipulators (5), and
- at least one optical detection device (40) assigned to the seizing ranges (4) and/or movement ranges of the at least two manipulators (5), which at least one optical detection device (40) is prepared and equipped for the acquisition of space coordinates and/or position data and/or contour data of at least one piece good of the at least three transport devices (3), the at least one piece good being moved in transport direction (TR),
- wherein at least the manipulators (5) and/or the at least three transport devices (3) arranged parallel to each other and/or the at least three parallel horizontal conveyors (6) and/or further conveyor components of the device (10) are calibratable and/or controllable based on the space coordinates and/or position data and/or contour data,
- wherein the at least one optical detection device (40) is designed to be at least temporarily movable parallel to the at least three horizontal conveyors (6) assigned to the seizing range (4).

2. The apparatus (10) according to claim 1, in which the piece goods are movable in transport direction (TR) in four parallel rows to the seizing ranges (4) of the at least two manipulators (5), wherein each of these rows is assigned to and/or movable by means of one of four parallel transport devices (3).

3. The device according to claim 2, in which the seizing ranges (4) of the at least two manipulators (5) are assigned four parallel horizontal conveyors (6), each of which is aligned with the four following parallel transport devices (3), which horizontal conveyors (6) transport the piece goods in transport direction (TR), with the piece goods coming into the seizing ranges (4) and being rotated and/or shifted there by means of the manipulators (5).

4. The apparatus according to one of the claims 1 to 3, in which the at least three parallel transport devices (3) are each drivable independently of one another, wherein the at least three parallel transport devices (3) are, in particular, each assigned a separate and/or separately controllable drive (16).

5. The apparatus according to one of the claims 1 to 4, in which the at least three parallel horizontal conveyors (6) are each drivable independently of one another, wherein the at least three parallel horizontal conveyors (6) are, in particular, each assigned a separate and/or separately controllable drive (17).

6. The apparatus according to one of the previous claims, in which one optical detection device (40) is provided for each transport device (3), wherein at least two optical detection devices (40) are arranged so as to be movable parallel to the transport direction (TR) in or against the transport direction (TR) in the area of a longitudinal side of a horizontal conveying surface (8) formed by the at least three horizontal conveyors (6).

7. The apparatus according to one of the previous claims, in which the optical detection device (40) is formed by at least one edge scanner, which delivers space coordinates and/or position data and/or contour data to the control unit and/or analysis unit (12) for a piece good of the particular assigned row, which piece good is being moved, which edge scanner delivers, in particular, space coordinates and/or position data and/or contour data for the in each instance foremost located piece good of the particular assigned row and/or for a contour edge (30) facing forward or backward in transport direction (TR), or in which the optical detection device (40) is formed by at least one camera with downstream image evaluation, from the data of which the control unit and/or analysis unit (12) obtains space coordinates and/or position values and/or contour values for a piece good of the particular assigned row, which piece good is being moved, from the data of which the control unit and/or analysis unit (12) obtains, in particular, space coordinates and/or position values and/or contour values for the in each instance foremost located piece good of the particular assigned row and/or for its contour edge (30) facing forward or backward in transport direction (TR).

8. A method for handling piece goods being moved in at least three parallel rows, wherein the piece goods are transported to seizing ranges (4) of at least two manipulators (5) which are controllable and movable independently of each other,
- wherein the seizing ranges (4) of the at least two manipulators (5) are assigned at least three parallel horizontal conveyors (6), each of which is aligned with at least three following parallel transport devices (3), which horizontal conveyors (6) transport the piece goods in transport direction (TR), with the piece goods coming into the seizing ranges (4) and being rotated and/or shifted there by means of the manipulators (5),
- wherein in each case at least one transported piece good of the at least three parallel rows is seized in the seizing ranges (4) by one of the at least two manipulators (5), is spatially separated from subsequent piece goods of the particular row, and is brought into a specified relative target position (P) and/or target alignment in relation to the subsequent piece goods of the particular row,
- wherein at least space coordinates and/or a position of one of the piece goods of at least one row, which piece good is being moved in transport direction (TR) to the seizing ranges (4), is sensor-detected and provided as position value to a control unit and/or analysis unit (12) by at least one optical detection device (40) that is spatially and/or functionally assigned to the seizing ranges (4), and
- wherein at least the manipulators (5) and/or the at least three transport devices (3) arranged parallel to each other and/or the at least three parallel horizontal conveyors (6) and/or further assigned conveyor components are calibrated and/or controlled based on the space coordinates and/or position data and/or contour data,
- wherein the at least one optical detection device (40) is at least temporarily moved parallel to the at least three horizontal conveyors (6) assigned to the seizing ranges (4).

9. The method according to claim 8, in which the piece goods are moved in transport direction (TR) in four parallel rows to the seizing ranges (4) of the at least two manipulators (5), wherein each of these rows is assigned to and/or moved by means of one of four parallel transport devices (3), and in which the seizing ranges (4) of the at least two manipulators (5) are assigned four parallel horizontal conveyors (6), each of which is aligned with the four following parallel transport devices (3), which horizontal conveyors (6) transport the piece goods in transport direction (TR), with the piece goods coming into the seizing ranges (4) and being rotated and/or shifted there by means of the manipulators (5).

10. The method according to one of the claims 8 or 9, in which the at least three parallel transport devices (3) are each driven independently of one another, wherein the at least three parallel transport devices (3) are, in particular, each assigned a separate and/or separately controllable drive (16).

11. The method according to one of the claims 8 to 10, in which the at least three parallel horizontal conveyors (6) are each driven independently of one another, wherein the at least three parallel horizontal conveyors (6) are, in particular, each assigned a separate and/or separately controllable drive (17).

12. The method according to one of the previous claims, in which each row is assigned an optical detection device (40), wherein at least two optical detection devices (40) are moved together within a movement range parallel to a horizontal conveying device (6) assigned to the seizing ranges (4) via a single drive, and/or wherein each row is assigned an optical detection device (40), wherein each optical detection device has its own drive, wherein at least two optical detection devices (40) are moved independently of each other parallel to the transport direction (TR) in or against the transport direction (TR) in the area of a longitudinal side of the horizontal conveyors (6).

13. The method according to claim 12, in which the at least three optical detection devices (40) are designed such that a first optical detection device (40) detects piece goods of a first row, that a second optical detection device (40) detects piece goods of a second row, and that a third optical detection device (40) detects piece goods of a third row.

## Revendications

1. Dispositif (10) de manipulation de produits de détail déplacés en au moins trois rangées parallèles, comprenant
- au moins deux manipulateurs (5) pour des produits de détail, qui peuvent être commandés et déplacés indépendamment les uns des autres,
- au moins trois dispositifs de transport (3) disposés parallèlement les uns aux autres par l'intermédiaire desquels les produits de détail déplacés peuvent être transportés dans une direction de transport (TR) vers des zones de saisie (4) desdits au moins deux manipulateurs (5),
- dans lequel aux zones de saisie (4) desdits au moins deux manipulateurs (5) sont associés au moins trois dispositifs de transport horizontal (6) parallèles qui sont respectivement contigus en alignement aux dispositifs de transport (3) et qui transportent, dans la direction de transport (TR), les produits de détail entrant dans les zones de saisie (4) et tournés et/ou déplacés dans celles-ci au moyen des manipulateurs (5), ainsi qu'
- au moins un dispositif de détection optique (40) qui est associé aux zones de saisie (4) et/ou aux espaces de déplacement desdits au moins deux manipulateurs (5) et qui est préparé et équipé pour acquérir des coordonnées spatiales et/ou des données de position et/ou de contour d'au moins un produit de détail desdits au moins trois dispositifs de transport (3), qui est déplacé dans la direction de transport (TR),
- dans lequel au moins les manipulateurs (5) et/ou lesdits au moins trois dispositifs de transport (3) disposés parallèlement les uns aux autres et/ou lesdits au moins trois dispositifs de transport horizontal parallèles (6) et/ou d'autres composants de transport du dispositif (10) peuvent être calibrés et/ou commandés sur la base des coordonnées spatiales et/ou des données de position et/ou de contour,
- dans lequel ledit au moins un dispositif de détection optique (40) est conçu de manière à être au moins temporairement déplaçable parallèlement auxdits au moins trois dispositifs de transport horizontal (6) associés à la zone de saisie (4).

2. Dispositif (10) selon la revendication 1, dans lequel les produits de détail sont déplaçables en quatre rangées parallèles dans la direction de transport (TR) vers les zones de saisie (4) desdits au moins deux manipulateurs (5), dans lequel chacune de ces rangées est associée respectivement à l'un de quatre dispositifs de transport parallèles (3) et/ou est déplaçable au moyen de celui-ci.

3. Dispositif selon la revendication 2, dans lequel aux zones de saisie (4) desdits au moins deux manipulateurs (5) sont associés quatre dispositifs de transport horizontal parallèles (6) qui sont respectivement contigus en alignement aux quatre dispositifs de transport parallèles (3) et qui transportent, dans la direction de transport (TR), les produits de détail entrant dans les zones de saisie (4) et tournés et/ou déplacés dans celles-ci au moyen des manipulateurs (5).

4. Dispositif selon l'une quelconque des revendications 1 à 3, dans lequel lesdits au moins trois dispositifs de transport parallèles (3) peuvent être entraînés indépendamment les uns des autres, dans lequel, en particulier, respectivement un entraînement (16) distinct et/ou apte à être commandé séparément est associé auxdits au moins trois dispositifs de transport parallèles (3).

5. Dispositif selon l'une quelconque des revendications 1 à 4, dans lequel lesdits au moins trois dispositifs de transport horizontal parallèles (6) peuvent être entraînés respectivement indépendamment les uns des autres, dans lequel, en particulier, respectivement un entraînement (17) distinct et/ou apte à être commandé séparément est associé auxdits au moins trois dispositifs de transport horizontal parallèles (6).

6. Dispositif selon l'une quelconque des revendications précédentes, dans lequel un dispositif de détection optique (40) est prévu par dispositif de transport (3), dans lequel au moins deux dispositifs de détection optique (40) sont disposés au niveau d'un côté longitudinal d'une surface de transport horizontale (8) formée par lesdits au moins trois dispositifs de transport horizontal (6), de manière à pouvoir se déplacer parallèlement à la direction de transport (TR) dans ou contre la direction de transport (TR).

7. Dispositif selon l'une quelconque des revendications précédentes, dans lequel le dispositif de détection optique (40) est formé par au moins un scanner de bord qui fournit à l'unité de commande et/ou d'évaluation (12) des coordonnées spatiales et/ou des données de position et/ou de contour pour un produit de détail déplacé de la rangée respectivement associée, en particulier fournit des coordonnées spatiales et/ou des données de position et/ou de contour pour le produit de détail se trouvant respectivement en premier de la rangée respectivement associée et/ou d'un bord de contour (30) montrant vers l'avant ou vers l'arrière dans la direction de transport (TR), ou dans lequel le dispositif de détection optique (40) est formé par au moins une caméra avec une évaluation d'image montée en aval, à partir des données de laquelle l'unité de commande et/ou d'évaluation (12) acquiert des coordonnées spatiales et/ou des valeurs de position et/ou de contour pour un produit de détail déplacé de la rangée respectivement associée, en particulier acquiert des coordonnées spatiales et/ou des valeurs de position et/ou de contour pour le produit de détail se trouvant respectivement en premier de la rangée respectivement associée et/ou son bord de contour (30) montrant vers l'avant ou vers l'arrière dans la direction de transport (TR).

8. Procédé de manipulation de produits de détail déplacés en au moins trois rangées parallèles, dans lequel les produits de détail sont transportés vers des zones de saisie (4) d'au moins deux manipulateurs (5) aptes à être commandés et déplacés indépendamment les uns des autres,
- dans lequel aux zones de saisie (4) desdits au moins deux manipulateurs (5) sont associés au moins trois dispositifs de transport horizontal (6) parallèles qui sont respectivement contigus en alignement à trois dispositifs de transport parallèles (3) et qui transportent, dans la direction de transport (TR), les produits de détail entrant dans les zones de saisie (4) et tournés et/ou déplacés dans celles-ci au moyen des manipulateurs (5), et
- dans lequel, dans les zones de saisie (4), respectivement au moins un produit de détail transporté desdites au moins trois rangées parallèles est saisi par un desdits au moins deux manipulateurs (5), est séparé spatialement de produits de détail suivants de la rangée respective et est amené dans une position cible (P) et/ou une orientation cible relative(s) définie(s) par rapport aux produits de détail suivants de la rangée respective,
- dans lequel au moins des coordonnées spatiales et/ou une position d'un des produits de détail d'au moins une rangée, déplacés dans la direction de transport (TR) vers les zones de saisie (4), est/sont détectée(s) par capteur par l'intermédiaire d'au moins un dispositif de détection optique (40) qui est associé spatialement et/ou fonctionnellement aux zones de saisie (4) et est/sont mise(s) à la disposition d'une unité de commande et/ou d'évaluation (12) en tant que valeur de position, et
- dans lequel au moins les manipulateurs (5) et/ou lesdits au moins trois dispositifs de transport (3) disposés parallèlement les uns aux autres et/ou lesdits au moins trois dispositifs de transport horizontal parallèles (6) et/ou d'autres composants de transport associés sont calibrés et/ou commandés sur la base des coordonnées spatiales et/ou des données de position et/ou de contour,
- dans lequel ledit au moins un dispositif de détection optique (40) est déplacé au moins temporairement parallèlement auxdits au moins trois dispositifs de transport horizontal (6) associés aux zones de saisie (4).

9. Procédé selon la revendication 8, dans lequel les produits de détail sont déplacés en quatre rangées parallèles dans la direction de transport (TR) vers les zones de saisie (4) desdits au moins deux manipulateurs (5), dans lequel chacune de ces rangées est associée respectivement à un de quatre dispositifs de transport parallèles (3) et/ou est déplacée par celui-ci, et dans lequel aux zones de saisie (4) desdits au moins deux manipulateurs (5) sont associés quatre dispositifs de transport horizontal parallèles (6) qui sont respectivement contigus en alignement aux quatre dispositifs de transport parallèles (3) et qui transportent, dans la direction de transport (TR), les produits de détail entrant dans les zones de saisie (4) et tournés et/ou déplacés dans celles-ci au moyen des manipulateurs (5).

10. Procédé selon l'une quelconque des revendications 8 ou 9, dans lequel lesdits au moins trois dispositifs de transport parallèles (3) sont entraînés respectivement indépendamment les uns des autres, dans lequel, en particulier, respectivement un entraînement (16) distinct et/ou apte à être commandé séparément est associé auxdits au moins trois dispositifs de transport parallèles (3).

11. Procédé selon l'une quelconque des revendications 8 à 10, dans lequel lesdits au moins trois dispositifs de transport horizontal parallèles (6) sont entraînés respectivement indépendamment les uns des autres, dans lequel, en particulier, respectivement un entraînement (17) distinct et/ou apte à être commandé séparément est associé auxdits au moins trois dispositifs de transport horizontal parallèles (6).

12. Procédé selon l'une quelconque des revendications précédentes, dans lequel respectivement un dispositif de détection optique (40) est associé à chaque rangée, dans lequel au moins deux dispositifs de détection optique (40) sont déplacés conjointement par un seul entraînement à l'intérieur d'une zone de déplacement parallèlement à un dispositif de transport horizontal (6) associé aux zones de saisie (4), et/ou dans lequel respectivement un dispositif de détection optique (40) est associé à chaque rangée, dans lequel chaque dispositif de détection optique présente un propre entraînement, dans lequel au moins deux dispositifs de détection optique (40) sont déplacés indépendamment les uns des autres au niveau d'un côté longitudinal des dispositifs de transport horizontal (6) parallèlement à la direction de transport (TR) dans ou contre la direction de transport (TR).

13. Procédé selon la revendication 12, dans lequel lesdits au moins trois dispositifs de détection optique (40) sont conçus de telle sorte qu'un premier dispositif de détection optique (40) détecte des produits de détail d'une première rangée, qu'un deuxième dispositif de détection optique (40) détecte des produits de détail d'une deuxième rangée, et qu'un troisième dispositif de détection optique (40) détecte des produits de détail d'une troisième rangée.
